# EUROPÄISCHE PATENTSCHRIFT

(11) **EP 3 449 710 B1**
(45) Veröffentlichungstag und Bekanntmachung des Hinweises auf die Patenterteilung: **07.12.2022**
(21) Anmeldenummer: 17001686.9
(22) Anmeldetag: 12.10.2017
(51) Int. Cl.: A01D 34/62, A01F 29/09

(54) **LANDWIRTSCHAFTLICHE ARBEITSVORRICHTUNG IN FORM EINES SCHLEGELMULCHERS**
AGRICULTURAL WORKING DEVICE IN FORM OF A FLAIL MOWER
DISPOSITIF DE TRAVAIL AGRICOLE SOUS FORME DE FAUCHEUSE À FLÉAU

(30) Priorität: 30.08.2017 DE 102017008126
(43) Veröffentlichungstag der Anmeldung: 06.03.2019
(73) Patentinhaber: Müthing GmbH & Co. KG, 59955 Winterberg (DE)
(72) Erfinder: Arnold, Martin, D-38275 Steinlah (DE); Löer, Hubertus, D-59609 Anröchte-Uelde (DE); Müthing, Michael, D-59955 Winterberg (DE)
(74) Vertreter: Lichti - Patentanwälte Partnerschaft mbB

(56) Entgegenhaltungen:
- EP-A1- 2 425 705
- WO-A1-82/01299
- GB-A- 561 474
- US-A- 5 477 666

## Beschreibung

Die Erfindung betrifft eine landwirtschaftliche Arbeitsvorrichtung in Form einer Mulchvorrichtung mit einem Arbeitsrotor mit Schlegeln.

Derartige landwirtschaftliche Arbeitsvorrichtungen zum Bearbeiten von Biomasse, insbesondere Pflanzenteilen zum Abtrennen und Zerkleinern von Bodenbewuchs, wie Gras, aber auch Pflanzenstoppeln, als Abtrenn- und Zerkleinerungsvorrichtungen, insbesondere als Mulch-, Mulch-Mäh-Vorrichtungen oder Bodenfräsen finden breite Anwendung unter anderem in der Brachflächen- und Landschaftspflege sowie der Landwirtschaft. Sie werden dort eingesetzt zum Mähen und Zerkleinern von Pflanzenaufwuchs, Pflanzenresten und Biomasse verschiedenster Art, wie beispielsweise Gras, Zwischenfrüchten, Pflanzenstoppeln von Getreide, Raps, Mais, Ästen oder Büschen. Dieses wird von den Arbeitsvorrichtungen vom Boden abgetrennt, aufgenommen, durch einen Arbeitsrotor der Arbeitsvorrichtung zerkleinert und wieder auf den Boden zurückgeführt. Das zerteilte und verteilte Pflanzenmaterial auf dem Boden verrottet auf dem Boden schnell aufgrund seiner Beschaffenheit. Es dient damit auch als Dünger für den Boden, zur Humusbildung und für Feldhygienemaßnahmen.

Derartige Arbeitsvorrichtungen weisen neben dem Arbeitsrotor eine Schneideinheit mit mindestens einer Schneidschiene auf, die beabstandet zum Arbeitsrotor innerhalb des Gehäuses der Arbeitsvorrichtung angeordnet ist. Der Abstand zwischen der Schneidschiene und dem Arbeitsrotor bildet einen Spalt aus, der in erster Linie die Größe und Verfassung des zerkleinerten Pflanzenmaterials bestimmt. Bei den meisten Arbeitsvorrichtungen aus dem Stand der Technik ist die Schneidschiene samt Schneideinrichtung örtlich fest innerhalb des Gehäuses der Arbeitsvorrichtung angeordnet. Eine Anpassung an verschiedene Schnittlängen, und Abstände zum Arbeitsrotor ist daher nicht möglich.

Bekannt sind einzelne Arbeitsvorrichtungen der genannten Art, bei denen die Schneideinrichtung beziehungsweise die Schneidschiene manuell vom Benutzer verstellt werden kann. Hierzu werden zunächst Befestigungselemente gelöst, die die Schneideinrichtung an dem Gehäuse der Arbeitsvorrichtung halten. Anschließend wird die Schneideinrichtung beziehungsweise die Schneidschiene versetzt und wieder mittels der Befestigungselemente am Gehäuse der Vorrichtung angebracht. Dieser Prozess ist bei sich häufig wechselnden Umständen, beispielsweise bei Änderungen der Pflanzen- bzw. Biomasse oder der Menge, der Dichte, der Feuchtigkeitsgehalte, der Bodenverhältnisse oder bei Witterungsänderungen, sehr mühsam und erlaubt keine dynamische Anpassung der Schneideinrichtung während des Betriebs der Vorrichtung. Außerdem ist der Platz im Innenraum des Gehäuses derart stark begrenzt, dass einzelne, im Arbeitsweg des zu zerkleinernden Bodenbewuchses angeordnete Komponenten den Arbeitsfluss wesentlich stören.

Die GB 561 474 A beschreibt einen Spindelmäher mit einer Schneideinrichtung mit einer Scherklinge und einer rotierbaren Schneideinrichtung, wobei zur Erzielung der Schnittwirkung die rotierbare Schneideinrichtung mit der Scherklinge in Kontakt stehen muss. Bei fortwährender Benutzung des Spindelmähers nutzt sich die Scherklinge derart ab, dass zwischen der Scherklinge und der Schneideinrichtung ein Spalt gebildet wird und eine effektive Schnittwirkung ausbleibt. Durch ein exzentrisches Teil kann der Abstand zwischen der rotierbaren Schneideinrichtung und der Scherklinge eingestellt werden, indem das exzentrische Teil mittels seitlich der Scherklinge an derselben angeordneter Haltevorrichtungen und zweier Querwellen angelenkt ist. Die Verstellung der Scherklinge erfolgt mittels manueller Betätigung eines Bolzens und ist mühsam.

Die WO 82/01299 A1 zeigt einen weiteren Spindelmäher mit einem Schneidrad mit Schneiden, die mit einer sich quer erstreckenden Schneidkante zusammenwirken. Es ist weiterhin ein Einstellsystem mit Betätigungsmitteln vorgesehen, um die Schneidkante in Richtung des Schneidrades zu bewegen.

Die Verstellung erfolgt dabei über eine Schwenkbewegung der Gegenschneide um eine zur Rotationsachse des Schneidrads parallele Schwenkachse.

Ein weiterer Spindelmäher gleicher Bauart ist aus der US 5 477 666 A bekannt. Hierbei erfolgt die Schwenkbewegung mittels eines hydraulisch oder pneumatisch betriebenen Hubkolbens.

Die EP 2 425 705 A1 betrifft eine Schneidvorrichtung für eine als Feldhäcksler ausgeführte landwirtschaftliche Erntemaschine mit einem drehbaren Schneidwerkzeug und einer diesem gegenüber verstellbaren Gegenschneide. Die Gegenschneide weist einen Gegenschneidbalken und einen Gegenschneidenträger auf. Zur Verstellung der Gegenschneide sind in Querrichtung seitlich an beiden Enden des Gegenschneidenträgers angreifende Verstelleinrichtungen vorgesehen, die über jeweils einen Hebelarm am Gegenschneidenträger angreifen und die Motoren mit jeweils einer Spindel aufweisen. Die Verstellung beider Seiten der Gegenschneide erfolgt immer unabhängig voneinander.

Die Aufgabe der Erfindung liegt darin, die genannten Nachteile zu beseitigen und die eingangs genannte Arbeitsvorrichtung dahingehend weiter zu entwickeln, dass eine Verstellbarkeit, insbesondere eine kontinuierliche, der Schneideinrichtung, im Arbeitsprozess von einem Benutzer ansteuerbar bei einem geringen Platzbedarf ermöglicht wird.

Die Aufgabe wird gelöst mit einer gattungsgemäßen landwirtschaftlichen Arbeitsvorrichtung mit den Merkmalen des Anspruchs 1.

Durch die erfindungsgemäße Ausgestaltung einer gattungsgemäßen Vorrichtung wird insbesondere erreicht, dass diese neben der bisherigen Funktion des Abtrennens, Aufnehmens, Förderns, Bearbeitens, Aufbereitens, Zerkleinern und Zerfasern von feststehender noch mit der Wurzel verbundener Biomasse, also Pflanzen, auch vorteilhaft zur entsprechende vorgenannten Bearbeitung von bereits abgetrennter auf der Bodenoberfläche liegender Biomasse, also Pflanzenteilen und Pflanzenresten, wie Pflanzenbewuchs, Pflanzen, Pflanzenreste, Pflanzen-Stoppel, Aufwuchs, Gras, Buschwerk, Astwerk und Biomasse aller Art einsetzbar ist.

Die Erfindung geht von der Überlegung aus, dass im Mittelbereich der Vorrichtung Komponenten derselben zur Verbindung mit einer Zug-/Tragführung vorhanden sind. Durch die Anordnung des Verbindungsstücks an einer Querseite der Vorrichtung müssen die Verbindungskomponenten nicht verändert werden, demnach wird gleichzeitig ein definierter Angriffspunkt für die Verstellung der Schneideinrichtung geschaffen. Dabei kann das Verbindungsstück auf der Ober- und/oder Unterseite der Schneidkante angeordnet sein und/oder an den zu den jeweiligen Querseiten weisenden Seitenflächen der Schneidschiene.

Mit Querrichtung im Sinne der Erfindung wird diejenige Richtung bezeichnet, die in der Horizontalen senkrecht zur Fahrtrichtung der Arbeitsvorrichtung steht. Die Höhenrichtung ist senkrecht zu sowohl der Fahrtrichtung als auch der Querrichtung.

Die Schneideinrichtung der erfindungsgenäßen Vorrichtung kann mindestens eine insbesondere plattenförmige Halterung aufweisen, die mit der Schneidschiene verbunden ist. Ein grundliegender Effekt der Erfindung ist die Verstellbarkeit der Schneidschiene. Mittels einer Halterung entfällt damit die Notwendigkeit, die Schneidschiene unmittelbar antreiben zu müssen. Die Schneidschiene wird durch eine Halterung gehalten. Die mechanische Stabilität der Schneidschiene wird so vergrößert. Vorzugsweise können mehrere Halterungen vorgesehen sein, zu denen die Schneidschiene relativ beweglich ist, um die mechanische Belastung der Schneidschiene pro Raumeinheit in Folge der Verstellung zu reduzieren. Insbesondere ist die Schneidschiene aufgrund der Halterung in Höhenrichtung und Querrichtung relativ zum Gehäuse der Vorrichtung festgelegt.

In einer vorteilhaften Ausgestaltung weist das Verbindungsstück einen Bolzen auf, der an der Schneidschiene festgelegt ist und der in eine Vertiefung, insbesondere in eine Ausnehmung der Verstelleinrichtung eingreift. Durch den Bolzen ist eine einfache Verbindungsmöglichkeit zu einem Antrieb für die Schneidschiene geschaffen, die die Übertragung der für die Verstellung der Schneidschiene notwendigen Kräfte gewährleistet.

Um Verschleißeffekte zu minimieren und ein sanftes Ansteuern der Schneideinrichtung zu ermöglichen, kann in der Vertiefung ein Gleitstein zwischen dem Bolzen und der Verstelleinrichtung angeordnet sein. Der Gleitstein im Sinne der Erfindung zeichnet sich insbesondere dadurch aus, dass der Bolzen möglichst reibungsarm in der Vertiefung der Verstelleinrichtung beweglich ist. Die Grundfläche des Gleitsteins kann dabei in Abhängigkeit der geometrischen Form der Vertiefung ausgestaltet sein und insbesondere (mehr-)eckig beziehungsweise rund sein.

In vorteilhafter Ausführung ist zwischen dem Bolzen und dem Gleitstein ein Federelement angeordnet das insbesondere eine den Gleitstein umgebende elastische Einfassung desselben ist. Das Federelement weist hierzu ein elastisches Material auf, so dass ein Teil der von der Verstelleinrichtung auf den Bolzen übertragenen Kraft in eine rückstellbare Verformung des Federelements umgewandelt wird. Hierdurch wird ein Verkanten der Schneidschiene vermieden.

Anstatt oder zusätzlich zur Ausgestaltung des Bolzens kann das Verbindungsstück mindestens eine Adapterplatte aufweisen, die mit der Verstelleinrichtung verbunden ist. Die Adapterplatte kann mit ihrer Fläche insbesondere senkrecht zur Fläche der Schneidschiene angeordnet sein und schafft insbesondere in dieser Ausgestaltung eine größere Verbindungsfläche zur Verstelleinrichtung. Dabei kann die Adapterplatte mit der Verstelleinrichtung mittels Schrauben, Bolzen und/oder Nieten verbunden sein. Die Verbindung zwischen der Adapterplatte und der Verstelleinrichtung kann lösbar ausgestaltet sein, um besonders einfach Wartungsarbeiten oder Justierungen händisch vorzunehmen.

Die Verstelleinrichtung weist einen Stellzylinder auf, der mit dem Kolben mittels der Adapterplatte mit der Schneideinrichtung und mit der Verstelleinrichtung verbunden sein kann.

Der Kolben ist linear beweglich innerhalb des Stellzylinders geführt. Durch diese Ausgestaltung ist eine effektive Möglichkeit gegeben, eine Antriebsbewegung in eine Linearbewegung zum Verstellen der Schneidschiene umzuwandeln. Der Stellzylinder kann auf seiner Mantelfläche einen insbesondere zylinderförmigen Nocken aufweisen, der formschlüssig mit der Verstelleinrichtung in Eingriff bringbar ist. Hierdurch ist das Verbindungsstück besonders stabil mit der Verstelleinrichtung verbunden. Stellzylinder sind vorzugsweise Hydraulikzylinder, arbeiten also mit Hydrauliköl als Arbeitsmittel. Auch pneumatisch betriebene Stellzylinder sind einsetzbar.

In einer besonders bevorzugten Ausgestaltung weist die Verstelleinrichtung eine verschwenkbare Schwinge auf. Durch das Ausnutzen einer Verschwenkbewegung zum Antrieb der Schneideinheit können insbesondere Hebeleffekte genutzt werden. Ebenfalls kann die für den Antrieb erforderliche Schwenkbewegung der Schwinge räumlich getrennt vom Bereich des zerkleinerten Pflanzenguts angeordnet sein.

Die Schwinge kann eine langlochförmige Ausnehmung aufweisen, insbesondere einen langlochförmigen Durchbruch, in die/den das Verbindungsstück eingreift. Auf diese Weise ist eine einfache Führung und Verbindung des Verbindungsstücks in beziehungsweise mit der Schwinge ausgestaltet. Die Schwenkachse der Schwinge kann dabei mit der Querrichtung zusammenfallen.

Vorzugsweise weist die Verstelleinrichtung eine insbesondere sich in Querrichtung erstreckende und um die Querrichtung drehbare Drehwelle auf, die mit der Schwinge drehfest verbunden ist. Zur Erhöhung der mechanischen Stabilität kann die Welle über mehrere Lagerungen am Gehäuse der Vorrichtung gehalten werden. Durch die Drehwelle kann eine an einem Ende der Schwenkschiene erfolgende Verstellung derselben, mittels eines seitlich angeordneten Stellzylinders zum anderen Ende übertragen werden, ohne dass Synchronisationen erforderlich sind.

In besonders vorteilhaften Ausführungen sind zwei verschwenkbare Schwingen an beiden in Querrichtung einander gegenüber liegenden Außenseiten der Drehwelle angeordnet, die jeweils über ein Verbindungsstück mit der Schneideinrichtung verbunden sind. Auf diese Weise ist die Schneideinrichtung an zwei sich in Querrichtung gegenüberliegenden Stellen mechanisch angetrieben und die Punktbelastung auf die Schneideinrichtung in Folge der Antriebskraft reduziert.

Zur Vermeidung mechanischer Spannungen in Folge eines ungleichmäßigen Antriebs der Enden der Schneidschiene können auch Stellzylinder oder Stellmotoren an beiden Enden der Schneidschiene vorgesehen sein, die eine stets gleich große Kraft in der gleichen Richtung auf die Schneideinrichtung bewirken. Hierzu kann eine Synchronisationseinrichtung vorgesehen sein, so dass ein Kraft- beziehungsweise Richtungsgradient ausgleichbar ist. Vorzugsweise ist dieser Ausgleich hydraulisch oder elektrisch geregelt bewerkstelligbar.

In einer weiteren vorteilhaften Ausgestaltung weist die Verstelleinrichtung mindestens einen insbesondere bügelförmigen und schwenkbaren Hebel auf, der drehfest mit der Drehwelle verbunden ist, vorzugsweise entlang des gesamten Querschnitts der Drehwelle. Infolge der reibbeziehungsweise formschlüssigen Ausgestaltung der Verbindung des Hebels mit der Drehwelle kann die Drehwelle durch den Hebel zu einer Drehung um ihre (Quer-)Achse veranlasst werden.

Der Stellzylinder kann gehäusefest und der Kolben mit dem Hebel verbunden sein.

Der Kolben beziehungsweise der Stellzylinder sind insbesondere während des Betriebs der Vorrichtung von einem Benutzer ansteuerbar, so dass eine Bewegung des Stellzylinders über den Hebel eine Rotation der Drehwelle verursacht.

Zur besseren Bedienbarkeit kann der Stellzylinder zumindest abschnittsweise eine Markierung, vorzugsweise in Form regelmäßiger Farbunterschiede entlang seiner Länge aufweisen, die der momentanen

Position des Stellzylinders relativ zum Kolben zugeordnet ist und während des Betriebs vom Benutzer der Vorrichtung von außen, insbesondere von einem Fahrerstand einsehbar ist. Auf diese Weise ist die momentane Auslenkung des Hydraulikkolbens, die insbesondere der momentanen Position der Schneidschiene entspricht, vom Benutzer insbesondere vom Fahrerstand eines Zug-/Tragfahrzeuges von außen mit einem Minimum an Aufwand einsehbar. Damit kann die Position der Schneidschiene zu jeder Zeit während des Betriebes vom Benutzer feinjustiert werden.

Erfindungsgemäß weist die Verstelleinrichtung einen Stellzylinder auf, der linear beweglich relativ zu einem Kolben gelagert ist. So erfolgt die Verstellung der Schneidschiene mittels einer Linearbewegung mittels des Stellzylinders bzw. des Kolbens. Die Ansteuerung erfolgt in dieser Version unmittelbar vom Stellzylinder bzw. Kolben.

Alternativ kann der Stellzylinder oder der Kolben mit einer Seitenwand der Vorrichtung verbunden sein, insbesondere mit einer Wand des Gehäuses der Vorrichtung. Auf diese Weise wird das Gehäuse als Widerlager für den Stellzylinder bzw. Kolben genutzt. In einer einfachen Ausgestaltung kann der Stellzylinder mittels eines Halteteils mit der Seitenwand der Vorrichtung verschraubbar sein. Kolben bzw. Stellzylinder sind dann jeweils indirekt oder direkt mit der Schneidschiene verbunden. Der Verstellweg des Stellzylinders und/oder dessen Hub können durch die Schraubbewegung vom Benutzer voreinstellbar sein.

Alternativ kann die Verstelleinrichtung zwei Stellzylinder aufweisen, die jeweils relativ zu ihrem Kolben verschieblich gelagert sind. Beide Stellzylinder können an in Querrichtung gegenüberliegenden Seiten der Schneideinrichtung mit dieser verbunden sein, so dass sich ein symmetrischer Aufbau ergibt. In dieser Ausgestaltung ist zur Verringerung von Scherkräften notwendig, dass beide Stellzylinder dann mit der gleichen Kraft beaufschlagt sind. Dies kann durch eine Synchronisationseinrichtung der bereits genannten Art insbesondere in elektrischer/hydraulischer Weise bewerkstelligt sein.

In höchst vorzugsweiser Ausgestaltung weist die Vorrichtung eine Positionsmesseinheit zum Messen der Position der Schneidschiene auf. Auf diese Weise ist die aktuelle Position der Schneidschiene jederzeit messbar und vom Benutzer kontrollierbar. Dabei kann die Positionsmesseinheit als Potenziometer ausgestaltet sein, insbesondere als Drehwinkelpotenzionmeter, mittels dessen die Schwenkposition der Schwinge messbar ist. Die sich ergebenden Messungen können den Benutzer insbesondere während des Betriebes der Vorrichtung mittels einer Anzeige einsehbar zur Verfügung gestellt werden.

Eine bevorzugte Weiterbildung sieht vor, dass die Schneideinrichtung Führungsräume zum Reinigung des Verstellwegs der Schneidschiene aufweist. Die Führungsräume laufen in Führungsschlitzen der Schneidschiene und führen diese derart; gleichzeitig räumen sie mit Schrägflächen die Führungsschlitze von sich ansammelnden Schmutz.

Weitere Vorteile und Merkmale der Erfindung ergeben sich aus den Ansprüchen und der nachfolgenden Beschreibung, in der Ausführungsbeispiele der Erfindung unter Bezugnahme auf die Figuren im Einzelnen erläutert sind. Dabei zeigen:
- Fig. 1: eine erfindungsgemäße Arbeitsvorrichtung in Seitenansicht bei abgenommener Seitenabdeckung des Mulchergehäuses;
- Fig. 2: eine vergrößerte Darstellung einer Schneideinrichtung der Vorrichtung von Figur 1;
- Fig. 3: eine Ansicht auf die Schneideinrichtung von Figur 2 von schräg unten;
- Fig. 4: eine vergrößerte Darstellung der Schneideinrichtung mit Verbindungsstück und Verstelleinrichtung;
- Fig. 5: eine weitere Seitenansicht der Verstelleinrichtung;
- Fig. 6: eine Gesamtansicht der Verstelleinrichtung von schräg oben;
- Fig. 7: eine vergrößerte Darstellung der Verstelleinrichtung von Figur 6 in einer Ansicht von schräg oben;
- Fig. 8: eine weitere Ausgestaltung der Verstelleinrichtung;
- Fig. 9: eine weitere Ausgestaltung der erfindungsgemäßen Verstelleinrichtung in einer Seitenansicht;
- Fig. 10-12: eine Betätigung der Verstelleinrichtung von Figur 9;
- Fig. 13: eine alternative Ausgestaltung der Verstelleinrichtung und
- Fig. 14-16: eine Betätigung der Verstelleinrichtung von Figur 13.

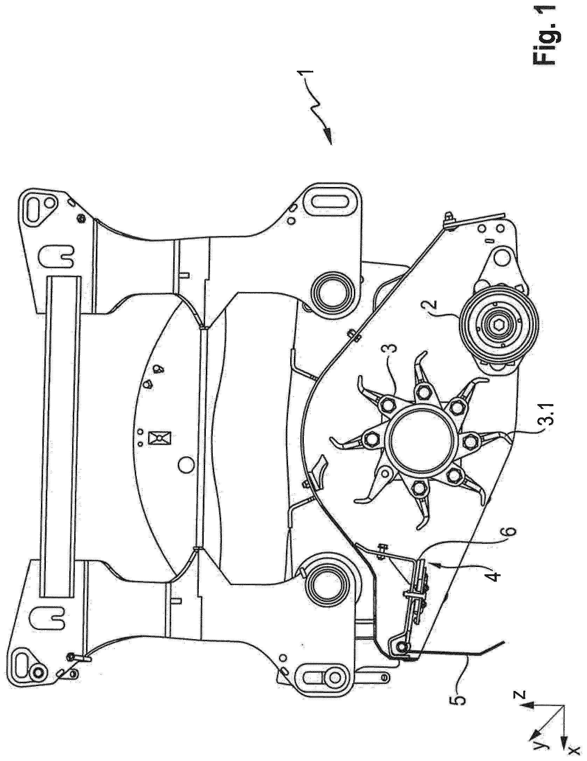

Figur 1 zeigt eine erfindungsgemäße landwirtschaftliche Arbeitsvorrichtung 1 in Form eines Mulchers, die in herkömmlicher Weise an ein Zuggerät, beispielsweise einen Traktor (nicht dargestellt) angeschlossen werden kann. Der Mulcher 1 weist eine Stützwalze 2 auf, sowie einen Arbeitsrotor 3 mit Schlegeln 3.1, eine Schneideinrichtung 4 und ein schwenkbares Schutzblech 5.

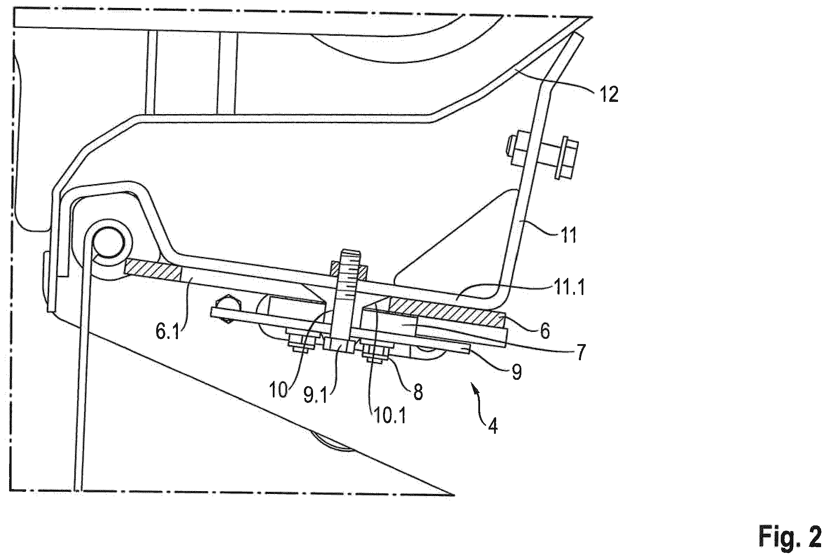

Wenn sich der Mulcher 1 während des Betriebs in Fahrtrichtung X (in Figur 1 nach links) bewegt, trennt der Arbeitsrotor 3 mittels seiner Schlegel 3.1 zu zerkleinernden Bewuchs als Schnittgut vom Boden und führt diesen an der Schneideinrichtung 4 vorbei. Die Schneideinrichtung 4 weist insbesondere eine Schneidschiene 6 auf, die vergrößert in Figur 2 dargestellt ist und die sich im Wesentlichen entlang der Querrichtung Y des Mulchers 1 erstreckt, wobei die Querrichtung Y horizontal gerichtet ist und senkrecht zur Fahrtrichtung X des Mulchers 1 steht.

Die Schneidschiene 6 zerkleinert den abgetrennten und aufgenommenen oder auch nur aufgenommenen, bereits vorher abgetrennten Bewuchs, der daraufhin durch die Rotationsbewegung des Arbeitsrotors 3 zuerst nach oben und dann hinter den Arbeitsrotor 3 nach unten dem Boden wieder zugeführt wird. Der Abstand der Schneidschiene 6 zum Arbeitsrotor 3 bestimmt dabei die Größe des zerkleinerten Schnittgutes. Sie stützt den Mulcher 1 gegenüber dem Boden ab. Durch oberhalb des Übergangsbereichs von Arbeitsrotor 3 und Stützwalze 2 angeordnete verstellbare Leitbleche (nicht dargestellt) kann das Schnittgut vor der Stützwalze 2 abgelegt oder über diese hinweg gefördert werden.

Figur 2 zeigt die erfindungsgemäße Schneideinrichtung 4 der Figur 1 in vergrößerter Darstellung. Die Schneidschiene 6 befindet sich in einem großen Abstand zum Arbeitsrotor 3. Sie ist derart mittels einer Verstelleinrichtung 14 im Wesentlichen entgegen und in Fahrtrichtung Y linear bewegbar, dass der Spalt zwischen der Schneidschiene 6 und dem Arbeitsrotor 3 veränderbar ist.

Letztere ist mittels Schrauben 8 gleitend zwischen einem unteren Schenkel 11.1 eines Winkelprofils 11 und einer gehäusefesten Gleitplatte 7 mit dem Winkelprofil 11 verbunden. Zwischen der Gleitplatte 7 und Köpfen der Schrauben 8 sind Gegenplatten 9 vorgesehen. Die vorgenannten Teile werden durch Schrauben 9.1 am Winkelprofil gehalten.

Führungsräume 10 umgeben die Schrauben 7.a. Sie laufen in hierzu vorgesehenen Führungsschlitzen der Schneidschiene 6 und führen diese so; gleichzeitig räumen sie mit Schrägflächen 10.1 die Führungsschlitze vor sich ansammelnden Schmutz.

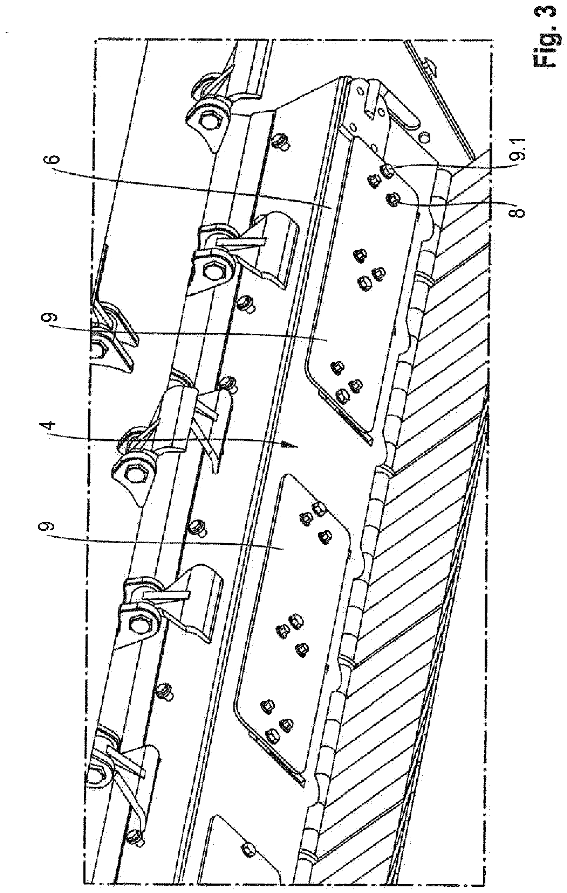

Figur 3 zeigt die Schneideinheit 4 der Figur 2 in einer Sicht von schräg unten. Über die gesamte Breite der Schneidschiene 6 sind zueinander in Querrichtung Y fluchtende durch die Schrauben 10 gehaltene Gegenplatten 9 unterhalb der Schneidschiene 6 angeordnet.

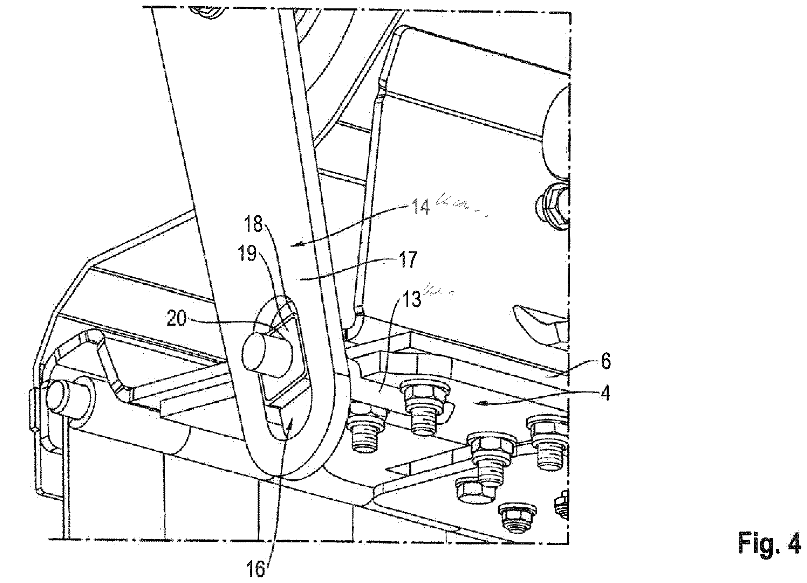

In Figur 4 ist die Verbindung der Schneideinrichtung 4 mittels eines Verbindungsstücks 13 mit einer Verstelleinrichtung 14 dargestellt. Das Verbindungsstück 13 ist als ein Bolzen ausgestaltet, der fest mit der Schneideinrichtung 4 verbunden ist. Der Bolzen 13 greift auf seiner der Schneideinrichtung 4 abgewandten Seite durch eine Vertiefung in Form einer langlochförmige Ausnehmung der Verstelleinrichtung 14, die eine um die Querrichtung Y verschwenkbare Schwinge 17 aufweist.

Zwischen der die Ausnehmung 16 umgebenden Wandung der Schwinge 17 und dem Bolzen 13 sind ein Gleitstein 18 und ein Federelement 19 angeordnet. Das Federelement 19 ist eine Umfassung des Gleitsteins 18 aus einem elastischen Material (Kunststoff) und dient dazu, Relativbewegungen zwischen dem Bolzen 13 und der Schwinge 17 abzufedern. Der Gleitstein 18 ermöglicht eine reibungsarme Führung des Bolzens 13 innerhalb der Ausnehmung 16 der Schwinge 17.

Wird die Schwinge 17 um die Querrichtung Y verschwenkt, bewegt sich der Bolzen 13 innerhalb der langlochförmigen Ausnehmung 16 linear und bewirkt auf diese Weise eine Verstellung der Schneideinrichtung 4 entgegen oder in Fahrtrichtung X auf den Arbeitsrotor 3 zu oder von diesem fort.

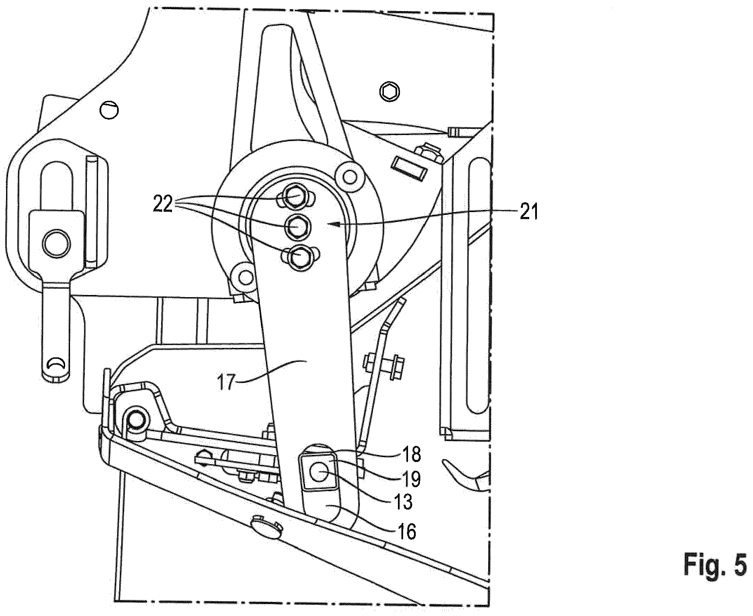

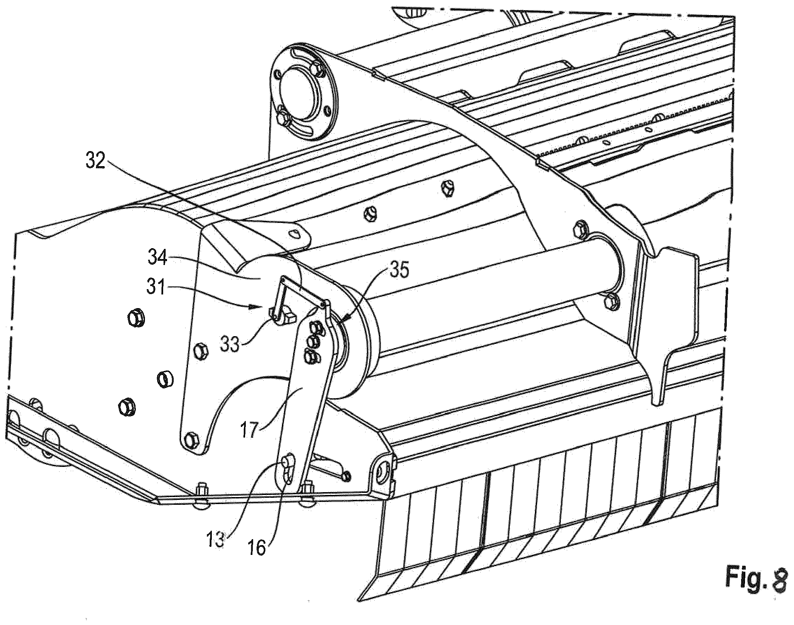

Figur 5 zeigt eine der Fig. 4 ähnliche Darstellung der Verstelleinrichtung mit weiteren Komponenten derselben. Es ist ersichtlich, dass die Schwinge 17 an einem dem Bolzen 13 abgewandten Bereich 21 mittels dreier Schrauben / Nieten 22 drehfest mit einer in Figur 5 nicht sichtbare Drehwelle 23 verbunden ist. Durch die Langlöcher der Schwinge 17, durch die die untere und die obere Schrauben hindurchgreifen, kann die Grundausrichtung der Schwinge 17 zur Drehwelle 23 fest eingestellt werden. Aus Fig. 8 ist ersichtlich, das die Schneidschiene 6 an ihrem anderen Ende ebenfalls in gleicher Weise über eine Schwinge 17 mit der Drehwelle 23 verbindbar ist, mit dem einzigen hier gegebenen Unterschied, dass der Bolzen 13 unmittelbar das entsprechende Langloch der Schwinge 17 ohne einen zwischengeschalteten Gleitstein durchgreift - der allerdings grundsätzlich ebenfalls vorgesehen sein kann.

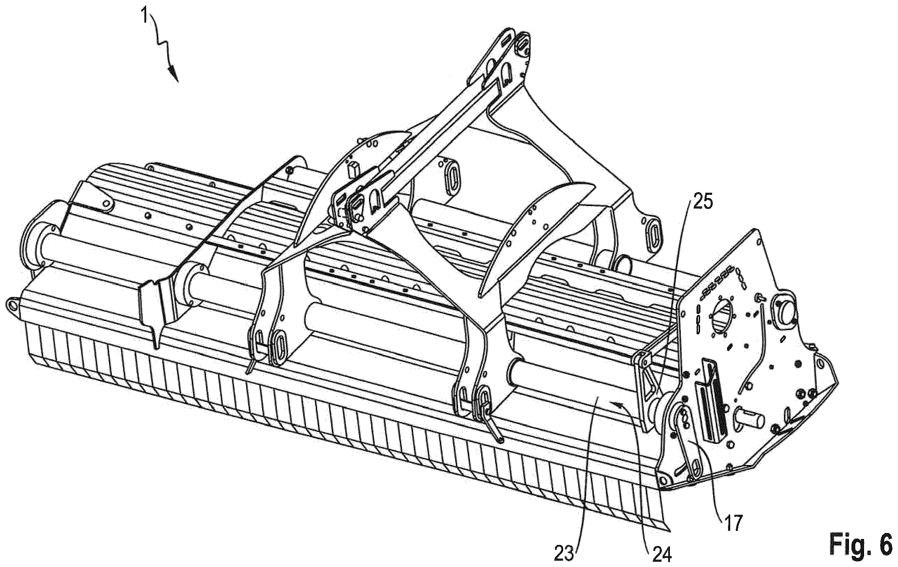

Figur 6 zeigt die Arbeitsvorrichtung 1 in einer Darstellung von schräg oben. Die drehfeste Verbindung der Schwinge 17 mit der sich in Querrichtung erstreckenden Drehwelle 23 ist ersichtlich. Die Drehwelle 23 ist um die Querrichtung Y rotierbar und erstreckt sich in ihrer Längsrichtung über die Breite der Arbeitsvorrichtung 1. An dem der Schwinge 17 zugewandten Endbereich 24 der Drehwelle 23 ist ein bügelförmiger Hebel 25 mit der Drehwelle 23 drehfest verbunden.

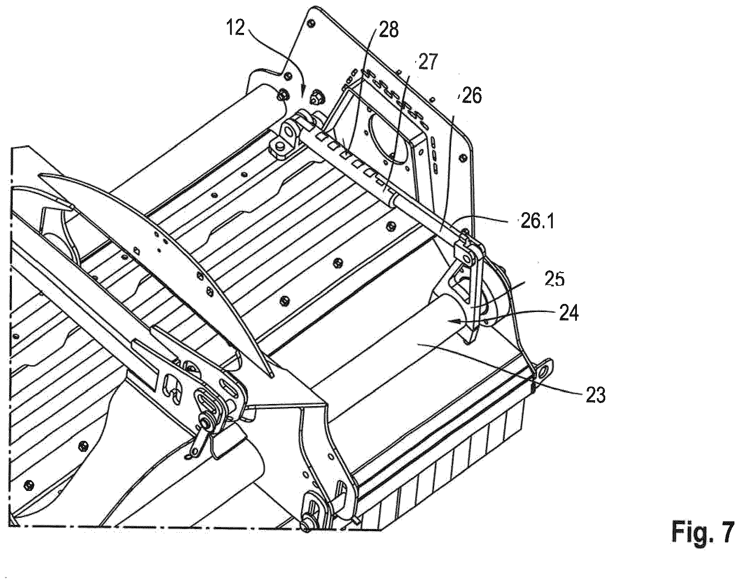

Figur 7 zeigt den Hebel 25 in vergrößerter Darstellung von schräg oben. Der Hebel 25 weist eine zweiteilige Ausgestaltung auf, mittels der die Drehwelle 23 entlang ihres gesamten Querschnitts drehfest umgriffen wird. Auf der der Drehwelle 23 abgewandten Seite des Hebels 25 ist der Hebel 25 gelenkig mit einem Kolben 26 eines Stellzylinders 27 verbunden und ist mittels diesem verschwenkbar. Der Stellzylinder ist vorzugsweise ein Hydraulikzylinder; das Arbeitsmittel ist also Hydrauliköl. Der Kolben 26 ist im Hydraulikzylinder 27 linear beweglich geführt. Der Hydraulikzylinder 27 ist fest mit dem Gehäuse 12 verbunden. Der Stellzylinder 27 weist auf seiner Mantelfläche 28 eine Skala auf, die unter einem mit dem freien Ende des Kolbens 26 verbundenen rückwärts über den Hydraulikzylinder bewegenden Stab 26.1 angeordnet ist, der den Bewegungszustand des Kolbens 26 im Stellzylinder 27 anzeigt. Die Skala 28 ist von außen vom Fahrer während des Betriebs des Mulchers 1 einsehbar.

Der Fahrer kann während des Betriebs des Mulchers 1 über eine nicht gezeigte Fernbedienung den Stellzylinder 27 betätigen, den Kolben 26 linear anfahren, was sich in einer Schwenkbewegung des Hebels 25 um die Drehwelle 23 äußert. Dadurch wird die Drehwelle 23 selbst in Rotation um die Querrichtung Y versetzt, wodurch die Schwinge 17 um die Querrichtung Y verschwenkt wird. Dadurch wird, wie bereits beschrieben, der Bolzen 13 und mit ihm die Schneideinrichtung 4 derart linear bewegt, dass der Abstand der Schneidschiene 6 in Relation zum Arbeitsrotor 3 verändert wird.

Die Figur 8 zeigt eine alternative Bestimmung der Anfahrposition der Schneidschiene 6. Hierzu ist seitlich neben der Schwinge 17 eine Positionsmesseinrichtung 31 angeordnet und mittels eines gelenkigen Bügels 32 mit der Schwinge 17 verbunden. Die Positionsmesseinrichtung 31 ist beispielsweise als Drehpotentiometer 33 ausgestaltet und auf einer äußeren Halteplatte 34 befestigt. Die äußere Halteplatte 34 weist darüber hinaus eine Ausnehmung 35 auf, die von der Drehwelle 23 durchgegriffen wird. Mittels des Drehpotentiometers 33 kann der Schwenkzustand der Schwinge 17 jederzeit elektronisch gemessen werden und wird dem Fahrer/Benutzer im Fahrerstand über ein entsprechendes Instrument angezeigt.

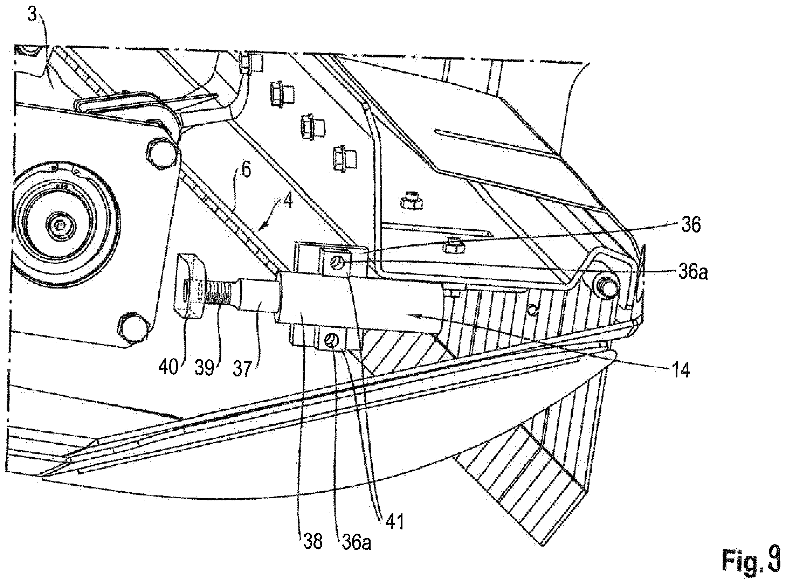

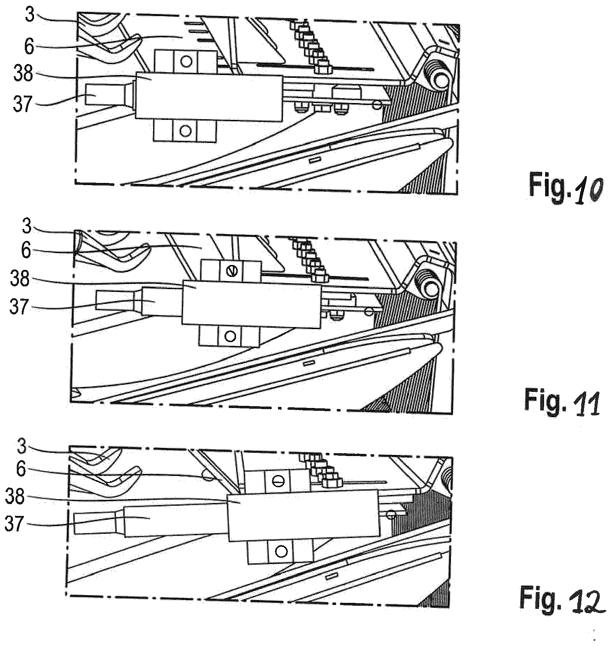

Figur 9 zeigt eine weitere Ausgestaltung der erfindungsgemäßen Arbeitsvorrichtung 1 in einer Ansicht von schräg oben und von außen, wobei die Außenwand des Mulchergehäuses 12 transparent dargestellt ist, um den Blick auf den Innenraum des Gehäuses 12 freizugeben. Im linken Bereich der Figur 10 ist der Arbeitsrotor 3 zu erkennen, zu dem die Schneidschiene 6 der Schneideinrichtung 4 beabstandet angeordnet ist. An einem in Querrichtung Y seitlich gelegenen Endbereich der Schneidschiene 6 ist ein dem Verbindungsstück 13 der vorstehend beschriebenen Ausgestaltung entsprechendes Verbindungsstück in Form einer Adapterplatte 36 senkrecht zur Haupterstreckungsrichtung der Schneidschiene 6 angeformt. Die Adapterplatte 36 weist zwei mit Gewinden versehene Löcher 36a auf, die zur Befestigung der Schneideinrichtung 4 an der Verstelleinrichtung 14 dienen.

Die Verstelleinrichtung 14 ist bevorzugt, wie in Figur 9 dargestellt, als Hydraulikzylinder 38 mit Kolben 37 ausgebildet, wobei der Hydraulikkolben 37 linear beweglich im Stellzylinder 38 geführt ist. Der Kolben 37 weist an seinem dem Stellzylinder 38 abgewandten Ende ein Gewinde 39 auf, mit dem der Hydraulikkolben 37 in einer an der in Figur 9 nicht dargestellten Innenwandung des Mulchergehäuses 12 fest angebrachten Halterung 40 festgelegt ist.

Der Stellzylinder 38 weist auf der Höhe der Löcher 36a zwei mit Gewinden versehene Befestigungselemente 41 auf, die als Platten ausgebildet sind und mittels derer der Stellzylinder 38 an der Adapterplatte 36 befestigt werden kann. Bei dieser Ausgestaltung ist also der Kolben 37 gehäusefest, der Hydraulikzylinder 38 beweglich mit der Schneidschiene 6 angeordnet. Die Anordnung kann auch umgekehrt gewählt werden.

Bei einer Betätigung des Stellzylinders 38 über eine in Figur 9 nicht dargestellte Betätigungsvorrichtung im Fahrergehäuse des Fahrzeugs an dem die Vorrichtung 1 angeschlossen ist, bewegt sich der Stellzylinder 38 linear entlang der Fahrtrichtung X oder dieser entgegen und veranlasst mittels seiner Verbindung mit der Adapterplatte 36 die Schneidschiene 6 der Schneideinrichtung 4 zu einer gleichlaufenden Bewegung.

Mittels der Verschraubbarkeit des Hydraulikkolbens 37 in der Halterung 40 am Mulchergehäuse 12 können sowohl die Startposition als auch der Hub des Stellzylinders 38 vom Nutzer vor Betriebnahme der Vorrichtung 1 eingestellt werden. Bei dieser Ausgestaltung weist die Verstelleinrichtung jeweils einen Hydraulikzylinder 38 mit Kolben 37 an jedem Ende der Schneidschiene 6 auf; es sind also insgesamt zwei Hydraulikzylinder mit Kolben vorgesehen.

Ein Gleichlauf der Hydraulikzylinder kann hydraulisch bewirkt werden, in dem einer der Zylinder als Muster, der andere als Schiene dient.

Der Gleichlauf kann auch über Sensoren und Aktoren über eine - elektrische - Regelung bewirkt werden.

Die Wirkungsweise der in Figur 9 dargestellten Ausführungsform ist in den Figuren 10 bis 12 dargestellt. Figur 10 zeigt den einen Stellzylinder 38 in einer Position, in der er maximal nach links auf den Arbeitsrotor zubewegt ist, so dass der Kolben 37 sich weitgehend im Hydraulikzylinder 38 befindet. In dieser Position ist die Schneidschiene 6 maximal ausgefahren und der Abstand zwischen der Schneidschiene 6 und dem Arbeitsrotor 3 minimal. Bei Betätigung der Stellzylinder 38 bewegen sich diese im Übergang der Figuren 10 bis 12 linear nach rechts, wodurch die Schneidschiene 6 stufenlos eingefahren wird, bis der Stellzylinder 38 in Figur 12 ihre maximal ausgelenkte Position erreicht und die Schneidschiene 6 maximal eingefahren ist.

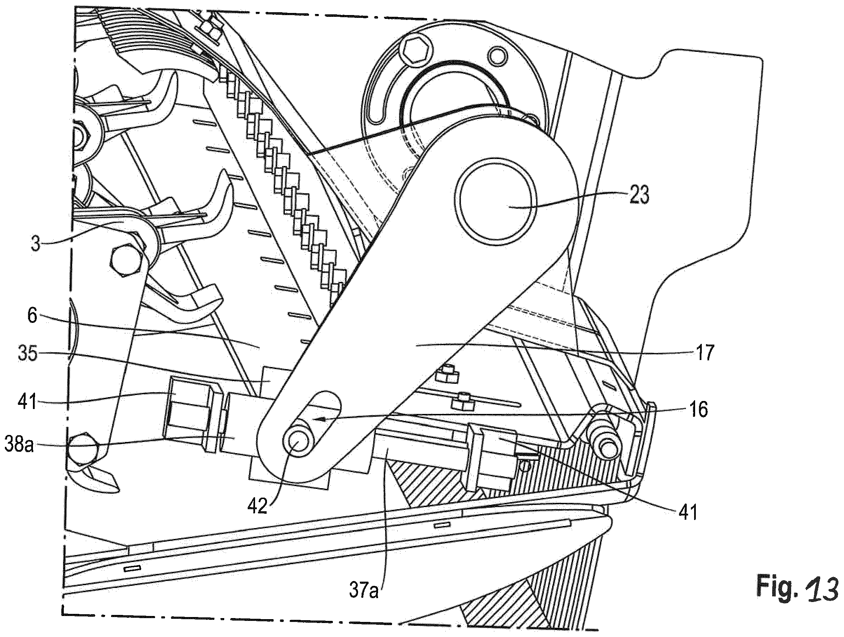

Figur 13 zeigt eine weitere Ausgestaltung der erfindungsgemäßen Vorrichtung in einer ähnlichen Ansicht wie Figur 9. Wie im vorigen Ausführungsbeispiel weist die Schneidschiene 6 an ihrem in Querrichtung seitlich gelegenen Endbereich eine mit Löchern 36a versehene Adapterplatte 36 auf, die an einem Hydraulikzylinder 38a befestigt ist. Der Hydraulikzylinder 38a ist ebenfalls linear beweglich relativ zu seinem Kolben 37a, der zwischen zwei am nicht dargestellten Mulchergehäuse 12 befestigten Bügeln 41 befestigt ist. Auf seinem dem Mulchergehäuse 12 zugewandten Teil der Mantelfläche des Hydraulikzylinders 38a ist ein zylinderförmiger Vorsprung 42 angeformt, der, ähnlich zu der bereits gezeigten ersten Ausführungsvariante, die Ausnehmung 16 der seitlich der Schneidschiene 6 angeordneten, verschwenkbaren Schwinge 17 durchgreift. Die Schwinge 17 ist dabei, wie bereits gezeigt, mit der in Querrichtung verlaufenen Drehwelle 23 drehfest verbunden.

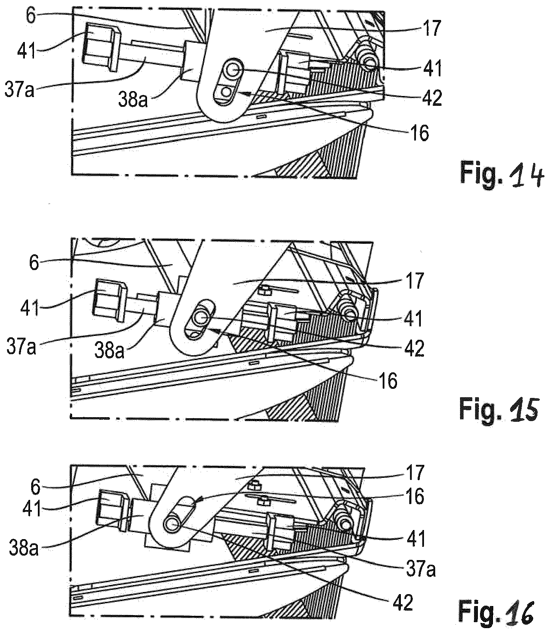

In dem in Figur 13 gezeigten Ausführungsbeispiel ist der Stellzylinder 38a passiv mittels der Schwinge 17 angetrieben und nicht unmittelbar ansteuerbar. In dem in Figur 13 gezeigten Ausführungsbeispiel erfolgt eine Zwangsführung an den Enden der Schneidschiene über eine Drehwelle entweder rein mechanisch mittels eines gefederten Gleitsteins wie bei der Ausgestaltung der Figuren 1 bis 8 unter Bezug auf diese oben beschrieben, oder mittels eines Zwangsgleichlaufs von an beiden Enden der Schneidschiene 6 und der Drehwelle angeordneten hydraulischen Zylindern über die Drehwelle. Die Bewegung des Hydraulikzylinders 38a und damit der Schneidschiene 6 ist in den Figuren 14 bis 16 dargestellt. In Figur 14 ist die Schneidschiene 6 in ihrer maximal eingefahrenen Position gezeigt, der Hydraulikzylinder 38a befindet sich maximal nach rechts ausgelenkt, wobei ein in Figur 14 gezeigter rechte Winkel 41 als Anschlag für den Hydraulikzylinder 38a dient. Ein seitlicher Nocken 42 am Hydraulikzylinder 38a greift in ein Langloch der Schwinge 17 ein und befindet sich am oberen Ende des Langlochs der Schwinge 17. Wird der Hydraulikzylinder bewegt, schwenkt er die Schwinge 17 und die Drehwelle mit um die Querrichtung Y mit, wodurch das untere Ende der Schneidschiene mitgeführt wird. Die Bewegung ist im Übergang der Figur 14 zur Figur 16 dargestellt. Der Nocken 42 bewegt sich im Langloch nach unten. Durch die Bewegung des Hydraulikzylinders 38a bewegt sich die Schneidschiene 6 in Fahrtrichtung X nach vorne auf den nicht dargestellten Arbeitsrotor zu. Die maximal ausgefahrene Position der Schneidschiene 6 ist in Figur 16 gezeigt, bei der der Hydraulikzylinder 38a maximal nach links bewegt ist. Der in Figur 16 links angeordnete Winkel 41 dient als Anschlag für diese Position. Der Nocken 42 des Hydraulikzylinders 38a befindet sich am unteren Ende der langlochförmigen Ausnehmung 16 der Schwinge 17. Bei sämtlichen Bewegungsvorgängen bleibt der Stellkolben 37a zwischen beiden Bügeln 41 eingespannt.

## Patentansprüche

1. Landwirtschaftliche Arbeitsvorrichtung (1) zum Bearbeiten von Biomasse, wie Pflanzenteile, in Form einer Mulchvorrichtung, mit einer Stützwalze (2), einem Arbeitsrotor (3) mit Schlegeln (3.1), einer Schneideinrichtung (4), die eine Schneidschiene (6) aufweist, und mit einer Verstelleinrichtung (14) zum Verstellen der mindestens einen Schneidschiene (6), wobei die Schneidschiene (6) einen Abstand zum Arbeitsrotor (3, 3.1) aufweist, der die Größe zerkleinerten Schnittguts bestimmt, wobei die Schneidschiene (6) mittels der Verstelleinrichtung (14) in und entgegen der Fahrtrichtung linear verstellbar ist, wobei die Schneideinrichtung (4) ein in Querrichtung (Y) seitlich angeordnetes Verbindungsstück (13, 35) aufweist, mittels dessen die Schneidschiene (6) mit der Verstelleinrichtung (14) verbunden ist und wobei die Verstelleinrichtung (14) einen Stellzylinder (27, 38) aufweist, in dem verschieblich ein Kolben (26, 37) gelagert ist.

2. Vorrichtung nach Anspruch 1, **dadurch gekennzeichnet, dass** die Schneideinrichtung (4) mindestens eine insbesondere plattenförmige Halterung (7, 9) aufweist, die die Schneidschiene (6) trägt.

3. Vorrichtung nach einem der Ansprüche 1 oder 2, **dadurch gekennzeichnet, dass** das Verbindungsstück (13) einen Bolzen (13) aufweist, der an der Schneidschiene (6) festgelegt ist und der in eine Vertiefung, insbesondere in eine Ausnehmung (15) der Verstelleinrichtung (14) eingreift.

4. Vorrichtung nach Anspruch 3, **dadurch gekennzeichnet, dass** in der Vertiefung (15) ein Gleitstein (18) zwischen dem Bolzen (13) und der Verstelleinrichtung (14) angeordnet ist.

5. Vorrichtung nach Anspruch 4, **dadurch gekennzeichnet, dass** der Gleitstein (18) ein Federelement (19) aufweist, das insbesondere eine den Gleitstein (18) umgebende elastische Einfassung (19) desselben ist.

6. Vorrichtung nach einem der vorangehenden Ansprüche, **dadurch gekennzeichnet, dass** das Verbindungsstück (13) mindestens eine Adapterplatte (35) aufweist, die mit der Verstelleinrichtung (14) verbunden ist.

7. Vorrichtung nach einem der Ansprüche 1 bis 6, **dadurch gekennzeichnet, dass** die Verstelleinrichtung (14) eine verschwenkbare Schwinge (17) aufweist.

8. Vorrichtung nach Anspruch 7, **dadurch gekennzeichnet, dass** die Schwinge (17) eine langlochförmige Ausnehmung (16), insbesondere einen langlochförmigen Durchbruch, aufweist, in die das Verbindungsstück (13) eingreift.

9. Vorrichtung nach Anspruch 7 oder 8, **dadurch gekennzeichnet, dass** die Verstelleinrichtung (14) eine insbesondere sich in Querrichtung (Y) erstreckende und um die Querrichtung (Y) drehbare Drehwelle (23) aufweist, die mit der Schwinge (17) drehfest verbunden ist.

10. Vorrichtung nach Anspruch 9, **dadurch gekennzeichnet, dass** die Verstelleinrichtung (14) mindestens einen Hebel (25) aufweist, der drehfest mit der Drehwelle (23) verbunden ist, vorzugsweise entlang des gesamten Querschnitts der Drehwelle (23), wobei der Hebel (25) insbesondere bügelförmig und schwenkbar ausgebildet ist.

11. Vorrichtung nach Anspruch 10, **dadurch gekennzeichnet, dass** der Kolben (26) linear beweglich angeordnet ist, wobei der Stellzylinder (27) mit dem Hebel (25) verbunden und der Kolben (26) gehäusefest ist.

12. Vorrichtung nach Anspruch 11, **dadurch gekennzeichnet, dass** der Hydraulikzylinder (27) zumindest abschnittsweise eine Markierung (28), vorzugsweise in Form regelmäßiger Farbunterschiede entlang seiner Länge aufweist, die momentane Position des Hydraulikzylinders (27) relativ zum Kolben (26) zugeordnet ist und während des Betriebs vom Benutzer der Vorrichtung (1) von außen, insbesondere von einem Fahrerstand einsehbar sind.

13. Vorrichtung nach einem der vorangehenden Ansprüche , **dadurch gekennzeichnet, dass** der Stellzylinder gehäusefest mit der Vorrichtung (1) verbunden ist.

14. Vorrichtung nach einem der vorangehenden Ansprüche, **dadurch gekennzeichnet, dass** die Vorrichtung (1) eine Positionsmesseinheit (31) zum Messen der Position der Schneidschiene (6) aufweist.

15. Vorrichtung nach Anspruch 14, **dadurch gekennzeichnet, dass** die Positionsmesseinheit (31) als Potentiometer (33) ausgestaltet ist, insbesondere als ein Drehwinkel-Potentiometer (33), mittels dessen die Schwenkposition der Schwinge (17) messbar ist.

16. Vorrichtung nach Anspruch 15, **dadurch gekennzeichnet, dass** die Schneideinrichtung (4) Führungsräume (10) zum Reinigen des Verstellwegs der Schneidschiene (6) aufweist.

## Claims

1. Agricultural working apparatus (1) for processing biomass, such as plant parts, in the form of a mulching apparatus, comprising a support roller (2), a working rotor (3) having flails (3.1), a cutting device (4) which has a cutting rail (6), and comprising an adjusting device (14) for adjusting the at least one cutting rail (6), wherein the cutting rail (6) is at a distance from the working rotor (3, 3.1) which determines the size of the shredded cutting material, wherein the cutting rail (6) is linearly adjustable in and counter to the direction of travel by means of the adjusting device (14), wherein the cutting device (4) has a connecting piece (13, 35) arranged laterally in the transverse direction (Y), by means of which connecting piece the cutting rail (6) is connected to the adjusting device (14) and wherein the adjusting device (14) has an actuating cylinder (27, 38) in which a piston (26, 37) is displaceably mounted.

2. Apparatus according to claim 1, **characterized in that** the cutting device (4) has at least one in particular planar holder (7, 9) which bears the cutting rail (6).

3. Apparatus according to either claim 1 or claim 2, **characterized in that** the connecting piece (13) has a bolt (13) which is fixed to the cutting rail (6) and which engages in a depression, in particular in a recess (15) of the adjusting device (14).

4. Apparatus according to claim 3, **characterized in that** a sliding block (18) is arranged in the depression (15) between the bolt (13) and the adjusting device (14).

5. Apparatus according to claim 4, **characterized in that** the sliding block (18) has a spring element (19), which is in particular a resilient enclosure (19) of the sliding block (18) that surrounds said sliding block.

6. Apparatus according to any of the preceding claims, **characterized in that** the connecting piece (13) has at least one adapter plate (35) which is connected to the adjusting device (14).

7. Apparatus according to any of claims 1 to 6, **characterized in that** the adjusting device (14) has a pivotable rocker (17).

8. Apparatus according to claim 7, **characterized in that** the rocker (17) has a slot-shaped recess (16), in particular a slot-shaped opening, in which the connecting piece (13) engages.

9. Apparatus according to either claim 7 or claim 8, **characterized in that** the adjusting device (14) has a rotary shaft (23) which extends in particular in the transverse direction (Y) and can be rotated about the transverse direction (Y) and which is connected to the rocker (17) for conjoint rotation.

10. Apparatus according to claim 9, **characterized in that** the adjusting device (14) has at least one lever (25) which is connected to the rotary shaft (23) for conjoint rotation, preferably along the entire cross section of the rotary shaft (23), the lever (25) being designed in particular so as to be U-shaped and pivotable.

11. Apparatus according to claim 10, **characterized in that** the piston (26) is arranged to be linearly movable, the actuating cylinder (27) being connected to the lever (25) and the piston (26) being fixed to the housing.

12. Apparatus according to claim 11, **characterized in that** the hydraulic cylinder (27) has, at least in portions, a marking (28), preferably in the form of regular color differences along its length, the current position of the hydraulic cylinder (27) relative to the piston (26) is assigned and can, during operation, be viewed by the user of the apparatus (1) from the outside, in particular from a driver's cab.

13. Apparatus according to any of the preceding claims, **characterized in that** the actuating cylinder is connected to the apparatus (1) so as to be fixed to the housing.

14. Apparatus according to any of the preceding claims, **characterized in that** the apparatus (1) has a position measuring unit (31) for measuring the position of the cutting rail (6).

15. Apparatus according to claim 14, **characterized in that** the position measuring unit (31) is designed as a potentiometer (33), in particular as a rotary angle potentiometer (33), by means of which the pivoting position of the rocker (17) can be measured.

16. Apparatus according to claim 15, **characterized in that** the cutting device (4) has guide spaces (10) for cleaning the adjustment path of the cutting rail (6).

## Revendications

1. Dispositif de travail agricole (1) pour le traitement de biomasse, telle que des parties de végétaux, sous la forme d'un dispositif de broyage, comportant un rouleau d'appui (2), un rotor de travail (3) comportant des fléaux (3.1), un appareil de coupe (4) qui présente un rail de coupe (6), et comportant un appareil de réglage (14) pour le réglage de l'au moins un rail de coupe (6), le rail de coupe (6) présentant une distance par rapport au rotor de travail (3, 3.1) qui détermine la taille de la matière coupée déchiquetée, le rail de coupe (6) pouvant être réglé linéairement dans et contre la direction de déplacement au moyen de l'appareil de réglage (14), l'appareil de coupe (4) présentant une pièce de liaison (13, 35) disposée latéralement dans la direction transversale (Y), au moyen de laquelle le rail de coupe (6) est relié à l'appareil de réglage (14) et l'appareil de réglage (14) présentant un vérin de réglage (27, 38) dans lequel un piston (26, 37) est monté de manière coulissante.

2. Dispositif selon la revendication 1, **caractérisé en ce que** l'appareil de coupe (4) présente au moins un support (7, 9), en particulier en forme de plaque, qui porte le rail de coupe (6).

3. Dispositif selon l'une des revendications 1 ou 2, **caractérisé en ce que** la pièce de liaison (13) présente un boulon (13) qui est fixé au rail de coupe (6) et qui vient en prise dans une dépression, en particulier dans un évidement (15) de l'appareil de réglage (14).

4. Dispositif selon la revendication 3, **caractérisé en ce qu'**un coulisseau (18) est disposé dans la dépression (15) entre le boulon (13) et l'appareil de réglage (14).

5. Dispositif selon la revendication 4, **caractérisé en ce que** le coulisseau (18) présente un élément à ressort (19) qui est en particulier une bordure élastique (19) entourant le coulisseau (18).

6. Dispositif selon l'une des revendications précédentes, **caractérisé en ce que** la pièce de liaison (13) présente au moins une plaque d'adaptation (35) qui est reliée à l'appareil de réglage (14).

7. Dispositif selon l'une des revendications 1 à 6, **caractérisé en ce que** l'appareil de réglage (14) présente un bras oscillant (17) pouvant pivoter.

8. Dispositif selon la revendication 7, **caractérisé en ce que** le bras oscillant (17) présente un évidement (16) en forme de trou oblong, en particulier une ouverture en forme de trou oblong, dans laquelle la pièce de liaison (13) vient en prise.

9. Dispositif selon la revendication 7 ou 8, **caractérisé en ce que** l'appareil de réglage (14) présente un arbre rotatif (23) qui s'étend en particulier dans la direction transversale (Y), peut tourner autour de la direction transversale (Y) et est relié de manière solidaire en rotation au bras oscillant (17).

10. Dispositif selon la revendication 9, **caractérisé en ce que** l'appareil de réglage (14) présente au moins un levier (25) relié de manière solidaire en rotation à l'arbre rotatif (23), de préférence sur toute la section transversale de l'arbre rotatif (23), le levier (25) étant conçu en particulier sous la forme d'un étrier et pouvant pivoter.

11. Dispositif selon la revendication 10, **caractérisé en ce que** le piston (26) est disposé mobile linéairement, le vérin de réglage (27) étant relié au levier (25) et le piston (26) étant fixé au boîtier.

12. Dispositif selon la revendication 11, **caractérisé en ce que** le vérin hydraulique (27) présente un marquage (28) au moins dans certaines régions, de préférence sous la forme de différences de couleur régulières sur sa longueur, qui est affecté à la position actuelle du vérin hydraulique (27) par rapport au piston (26) et est visible depuis l'extérieur, en particulier depuis un poste de conduite, pendant le fonctionnement du dispositif (1) par l'utilisateur.

13. Dispositif selon l'une des revendications précédentes, **caractérisé en ce que** le vérin de réglage est relié au dispositif (1) de manière à être fixé au boîtier.

14. Dispositif selon l'une des revendications précédentes, **caractérisé en ce que** le dispositif (1) présente une unité de mesure de position (31) pour la mesure de la position du rail de coupe (6).

15. Dispositif selon la revendication 14, **caractérisé en ce que** l'unité de mesure de position (31) est conçue sous la forme d'un potentiomètre (33), en particulier sous la forme d'un potentiomètre (33) à angle de rotation, au moyen duquel la position de pivotement du bras oscillant (17) peut être mesurée.

16. Dispositif selon la revendication 15, **caractérisé en ce que** l'appareil de coupe (4) présente des espaces de guidage (10) pour le nettoyage de la trajectoire de réglage du rail de coupe (6).
